# EUROPEAN PATENT SPECIFICATION

(11) **EP 3 580 003 B1**
(45) Date of publication and mention of the grant of the patent: **28.06.2023**
(21) Application number: 18751722.2
(22) Date of filing: 10.01.2018
(51) Int. Cl.: B28D 7/02, B28D 1/04

(54) **A TILE OR MASONRY SAW ASSEMBLY COMPRISING A DUST COLLECTION ARRANGEMENT**
ZIEGEL-ODER MAUERWERKSÄGEVORRICHTUNG MIT STAUBSAMMELANORDNUNG
SCIE À CARREAU OU DE MAÇONNERIE AVEC AGENCEMENT DE COLLECTE DE POUSSIÈRE

(30) Priority: 13.02.2017 SE 1750129
(43) Date of publication of application: 18.12.2019
(73) Proprietor: Husqvarna AB, 561 82 Huskvarna (SE)
(72) Inventor: WINTERFJORD, Olof, 426 71 Västra Frölunda (SE); ELMESTRAND, Karl, 433 62 Sävedalen (SE)
(86) International application number: PCT/SE2018/050016
(87) International publication number: WO 2018/147776

(56) References cited:
- EP-A2- 2 965 886
- WO-A2-2010/144627
- WO-A2-2010/144627
- KR-A- 20150 112 648
- US-A1- 2002 112 582
- US-B1- 6 273 081
- US-B2- 7 013 884

## Description

### TECHNICAL FIELD

The present disclosure relates to a tile or masonry saw assembly as per the preambles of appended independent claims 1 and 7.

### BACKGROUND

When a user is laying bricks or other masonry workpieces, sometimes the workpieces need to be cut. Cutting may be accomplished with diamond or other cutting blades on either tile or masonry saws. The saws may be provided as a saw assembly that may include a table for supporting a workpiece to be cut and structures for manipulating the position of the saw.

Such a cutting machine may be used for cutting hard materials such as concrete or rock, where the cutting procedure may result in the creation of dust. For example concrete dust is unhealthy to breathe and also impairs visions, and it is desired to minimize the creations of such dust that freely may expand in the air. Such free concrete dust that finds its way into the engine of the tool drastically affects the engine in a negative way, may cause undesirable health effects and generally pollutes the environment.

Many tools of the above type or for this purpose equipped with a water supply, where a flow of water is directed towards the saw blade in such a way that a large quantity of the dust is mixed with the water and thus retained and kept from expanding in the air.

The flow of water is preferably held at a minimum while maintaining a proper function, since the water normally has to be taken care of at the working site, more water than necessary is undesirable. At some working sites, a demand for cleanliness, or shortage of water, results in that such a water supply is undesired. For this purpose, many types of dust removal systems of vacuum cleaner type have been developed. Some of them have an integrated fan for propelling air into a dust hose that guides undesired dust particles to a remote dust container.

A saw assembly according to the preambles of appended independent claims 1 and 7 is known from US7013884.

US 7013884 discloses a masonry saw debris collection system where a movable work workpiece support has a shroud or hood assembly extending rearwardly from the table, including a vacuum chamber acting as a primary collection point or area.

It is desirable to obtain a more versatile and easily handled table saw dust collection arrangement.

### SUMMARY

It is an object of the present disclosure to provide a table saw dust collection arrangement that is more versatile and easily handled than previous such arrangements.

This object is achieved by means of a tile or masonry saw assembly comprising a saw device including a motor arranged to run a saw blade to cut a workpiece in a cutting direction. The saw assembly also comprises a frame that is arranged to support the saw device such that it is enabled to move relative to the frame to execute cutting operations by means of the saw blade, and a workpiece support operably coupled to the frame to support the workpiece relative to the saw device, and to allow the workpiece support to be moved along the frame. The saw assembly further comprises a cover assembly that has a first longitudinal extension and in turn comprises a cover and a supporting structure, and has a front end that is arranged to face the saw blade and a rear end that is arranged to face away from the saw blade. The cover assembly comprises a dust hose attachment that is positioned at the rear end and is arranged to be connected to a vacuum dust collection arrangement. The cover assembly is releasably attachable to the workpiece support, where the supporting structure comprises a base that is arranged to be attached to the workpiece support.

The workpiece support has a second longitudinal extension, where furthermore the base is arranged to be attached to the workpiece support by means of co-operating fastening means comprised in both the base and the workpiece support. These fastening means are intended to engage each other such that the base and the workpiece support both extend straight such that the first longitudinal extension runs parallel to the second longitudinal extension when the base is attached to the workpiece support.

The cover is movable relative to the base in the first longitudinal extension.

In a preferred example, the longitudinal extension is arranged to run along the cutting direction when the cover assembly is attached to the workpiece support.

According to another preferred example, the base comprises first fastening means and that the workpiece support comprises second fastening means, where the respective co-operating first fastening means and second fastening means comprises at least one of:
- One or more guiding pins and one or more apertures arranged to be engaged by said guiding pins.
- At least one resilient tongue part and at least one plate that is arranged to be engaged by said tongue part.
- Grooves and slide holders, where the slide holders are arranged to slide in the grooves.
- Longitudinally extending rods and longitudinally extending grooves, where each rod comprises a lowered hook part that is arranged to be inserted in an opening at the end of the groove.
- Longitudinally protruding hook members and indents, where the hook members are intended to be inserted into the indents.

This object is also achieved by means of a tile or masonry saw assembly comprising a saw device including a motor arranged to run a saw blade to cut a workpiece in a cutting direction. The saw assembly also comprises a frame that is arranged to support the saw device such that it is enabled to move relative to the frame to execute cutting operations by means of the saw blade, and a workpiece support operably coupled to the frame to support the workpiece relative to the saw device, and to allow the workpiece support to be moved along the frame. The saw assembly further comprises a cover assembly that has a first longitudinal extension and in turn comprises a cover and a supporting structure, and has a front end that is arranged to face the saw blade and a rear end that is arranged to face away from the saw blade. The cover assembly further comprises a dust hose attachment that is positioned at the rear end and is arranged to be connected to a vacuum dust collection arrangement. The supporting structure comprises a base that is arranged to be fastened to the workpiece support, where the cover is movable relative to the base in the first longitudinal extension along the cutting direction.

According to another preferred example, the cover assembly comprises telescopically extendable rail sections that are attached to the cover and to a rail section holder that is attached to the base, where the cover is attached, these rail sections enabling the cover to move relative to the base.

The present disclosure confers a plurality of advantages. A tile or masonry saw assembly is provided that is more versatile and easily handled than previous such assemblies. The present disclosure enables a wet cutting saw assembly to be easily configured for dry cutting. The present disclosure also provides a tile or masonry saw assembly comprising a cover assembly that is adjustable for different types of workpieces having different sizes, enabling a maximized degree of dust collection to be obtained for the present workpiece

### BRIEF DESCRIPTION OF THE DRAWINGS

The present disclosure will now be described more in detail with reference to the accompanying figures wherein:
- Figure 1: shows a perspective view of a saw device in a first state;
- Figure 2: shows a perspective view of a saw device in a second state;
- Figure 3: shows a perspective view of a saw device in a third state;
- Figure 4: shows a perspective view of a cover assembly where a cover is separated from a supporting structure;
- Figure 5: shows a perspective view of a cover assembly;
- Figure 6: shows a perspective view of a cover assembly released from a workpiece support;
- Figure 7: shows a side view of a cover assembly released from a workpiece support where guiding pins have engaged corresponding apertures;
- Figure 8: shows a perspective view of a cover assembly mounted to a workpiece support;
- Figure 9: shows a schematical perspective view of a first further example of how the frame is attached to the workpiece support;
- Figure 10: shows a schematical side sectional view of the arrangement in Figure 9;
- Figure 11: shows a schematical perspective view of a second further example of how the frame is attached to the workpiece support;
- Figure 12: shows a schematical top view of the arrangement in Figure 11;
- Figure 13: shows a schematical side sectional view of the arrangement in Figure 11 and Figure 12;
- Figure 14: shows a schematical perspective view of a third further example of how the frame is attached to the workpiece support;
- Figure 15: shows a schematical top view of the arrangement in Figure 14;
- Figure 16: shows a schematical side sectional view of the arrangement in Figure 14 and Figure 15;
- Figure 17: shows a schematical perspective view of a fourth further example of how the frame is attached to the workpiece support before mounting; and
- Figure 18: shows a schematical perspective view of the fourth further example of how the frame is attached to the workpiece support after mounting.

### DETAILED DESCRIPTION

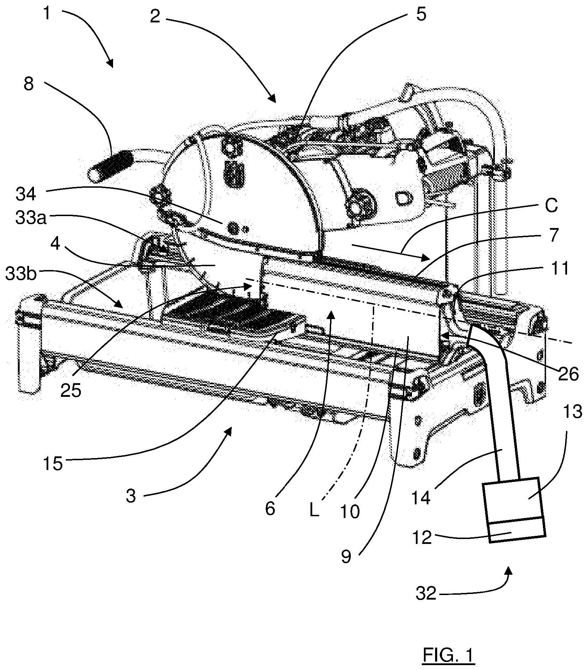

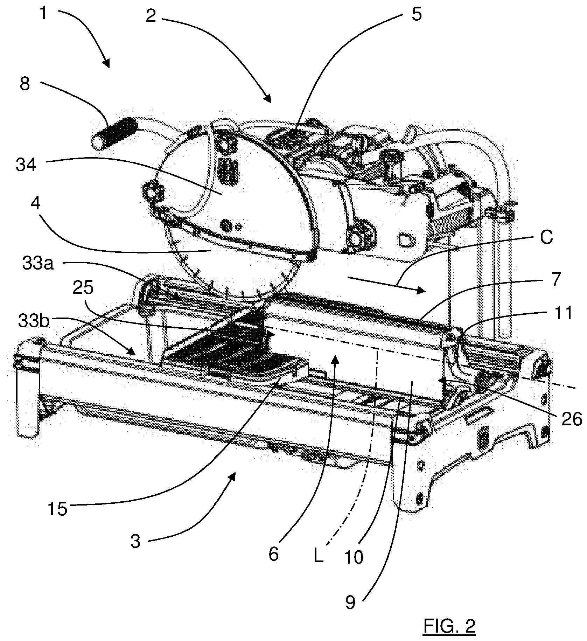

As shown in Figure 1, a there is a tile or masonry saw assembly 1 that comprises a saw device 2 and a frame 3. With reference also to Figure 2, showing the saw device 2 in a raised position relative the position shown in Figure 1, the frame 3 supports the saw device 2 such that it is enabled to move relative to the frame 3 to execute cutting operations by means of a saw blade 4 included in the saw device 2. For lowering and raising the saw device 2, the saw device 2 comprises a handle 8. The saw blade 4 is partially covered by a saw blade cover 34.

The saw device 2 further includes a motor 5 that is operable responsive to selective application of power from a power source, and that is configured to power and run the saw blade 4 to cut a workpiece, such as for example a tile, a stone, a brick, a piece of concrete or other such construction materials, in a cutting direction (C). Based on the power source employed, the motor 5 may be, for example, either electric powered or gasoline/petrol powered. The saw assembly 1 further comprises a workpiece support 15 onto which the workpieces are intended to be positioned when they are to be cut by means of the saw blade 4. The workpiece support 15 is movably carried by the frame 3.

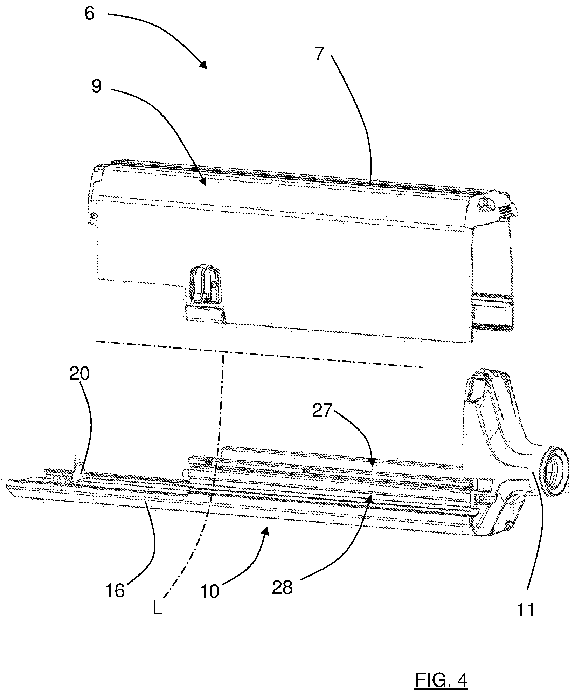

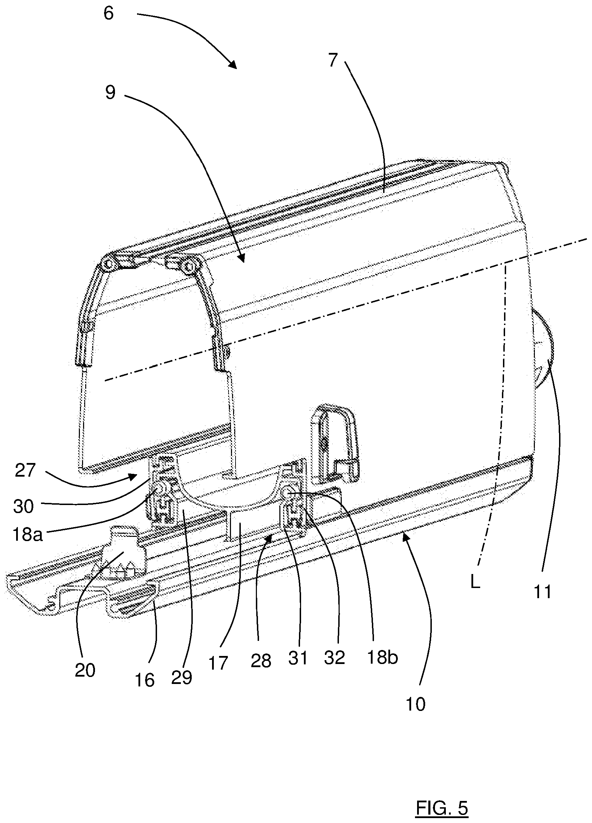

With reference also to Figure 4 and Figure 5, the saw assembly 1 comprises a cover assembly 6 that has a first longitudinal extension L along the cutting direction C, where the saw blade 4 is arranged to run in a slot 7 in the cover assembly 6, where the slot 7 is extending in the first longitudinal extension L. The cover assembly 6 has a front end 25 that is facing the saw blade 4 and a rear end 26 that is facing away from the saw blade 4. The cover assembly 6 comprises a cover 9 and a supporting structure 10, where Figure 4 shows the cover 9 separated from the supporting structure 10, and where Figure 5 shows the cover 9 mounted to the supporting structure 10.

A dust hose attachment 11 is positioned at the supporting structure 10, at the rear end 26. The dust hose attachment 11 is arranged to be connected to a dust hose or similar. As shown only in Figure 1, for reasons of clarity, a fan device 12 is arranged to convey air from the dust hose attachment 11 into a dust container 13 via a dust hose 14 such that dust that is created during sawing is collected in the cover assembly 6, inside the cover 9, and is propelled from the cover assembly 6 to the dust container 13. The dust hose 14, the dust container 13 and the fan device 12 in the described configuration is one example of a vacuum dust collection arrangement 32. A vacuum dust collection arrangement may of course be configured in many other ways that are well-known in the art.

With reference to Figure 1 - Figure 8, the supporting structure 10 comprises a base 16 that is intended to be fastened to the workpiece support 15.

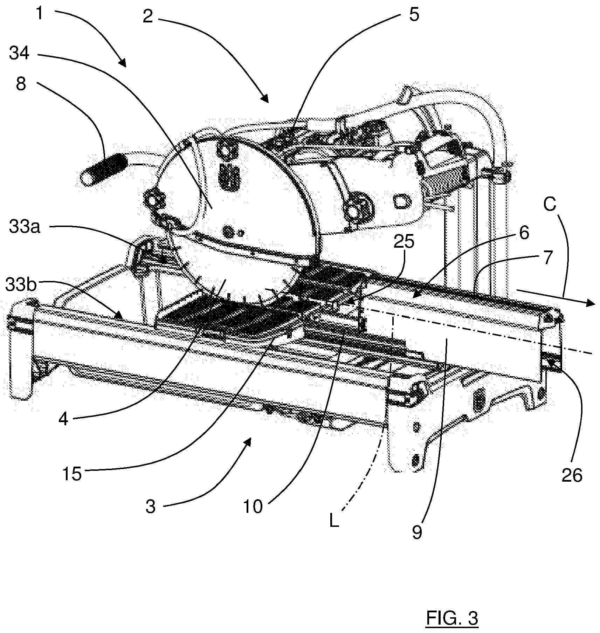

According to the present disclosure, as especially shown in Figure 1 and Figure 3, the cover 9 is movable relative the base 16 in the first longitudinal extension L. When the supporting structure 10 is attached to the workpiece support 15. the cover 9 is thus movable relative the workpiece support 15 as well, and adjustable for different types of workpieces having different sizes, enabling a maximized degree of dust collection to be obtained for the present workpiece. As shown in Figure 3, the cover 9 is moved past the dust hose attachment 11 at the rear end 26, such that the dust hose attachment 11 is covered by the cover 9 and thus not visible in Figure 3. The cover 9 is thus moved past the rear end 26, which in practice is rearmost at the cover assembly 6 only in dependence of the longitudinal position of the cover 9. The denomination rear end 26 is thus not to be interpreted as always being a literal rear end of the cover assembly 6, since the cover 9 can be moved past the rear end 26.

To accomplish this, the supporting structure 10 comprises telescopically extendable rail sections 27, 28 onto which the cover 9 is attached, these rail sections 27, 28 enabling the cover 9 to move relative the base 16. There is one rail section 27, 28 on each side of the cover assembly 6, running in the first longitudinal extension L. Each rail section 27, 28 comprises two or more telescopically arranged rails 29, 30; 30, 31 and wheels, roller or similar that are running between said rails 29, 30; 30, 31 in a previously well-known manner in order to enable the movement along the first longitudinal extension L. The rail sections 27, 28 are attached to a rail section holder 17 that is attached to the base 16. in this context, the term telescopically means that two or more rails are enabled to move relative each other, at least partially enclosing each other.

It is desirable to have the cover assembly 6 easily removable from the work workpiece support 15 for different reasons. One reason is that the saw assembly 1 according to some aspects is arranged for wet cutting as well, where water is applied to, or in the vicinity of, the saw blade 4 via previously well-known water supply mechanisms, with the intention of retaining dust. Another reason is that it is desirable to have the saw assembly 1 easily dismounted for transport. In accordance to the present disclosure, the cover assembly 6 is therefore releasably attachable to the workpiece support 15, as will be described more in detail in the following.

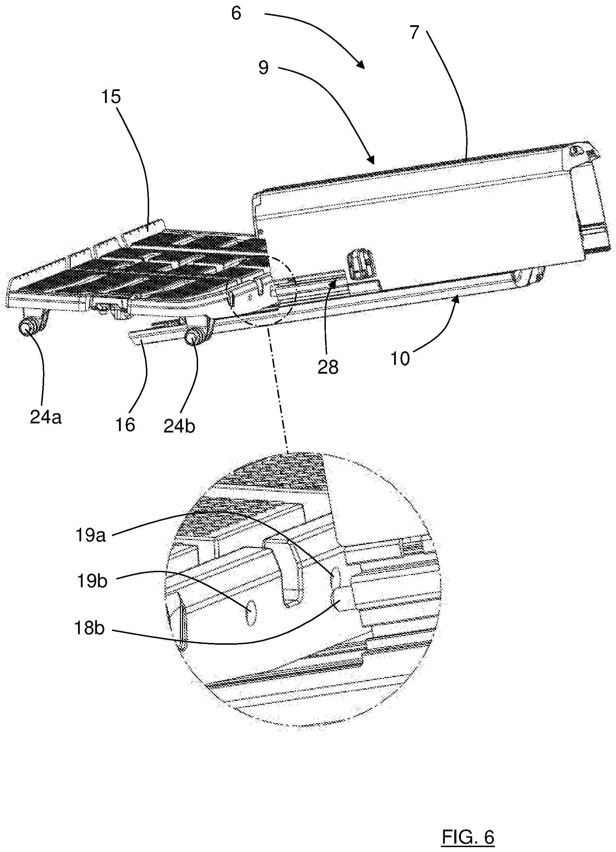

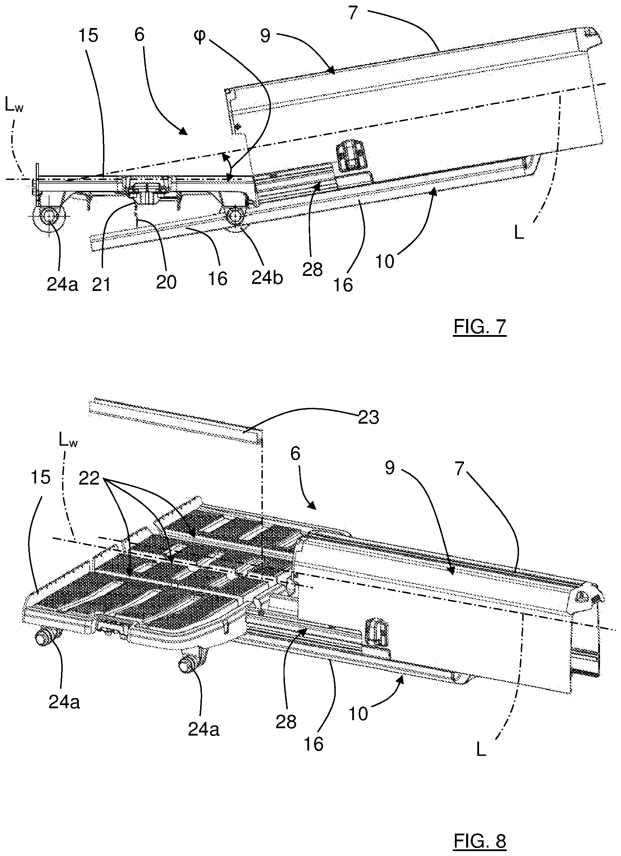

With reference to Figure 5 and also to Figure 6, showing a perspective view of the cover assembly 6 released from the workpiece support 15, the base 16 is arranged to extend beneath the workpiece support 15 when mounted. The rail section holder 17 comprises guiding pins 18a. 18b that are arranged to engage corresponding apertures 19a, 19b in the workpiece support 15. Furthermore, with reference also to Figure 7, showing a side view of the cover assembly 6 still released from the workpiece support 15, but where the guiding pins 18a, 18b have engaged the apertures 19a, 19b, the base comprises a resilient tongue part 20 that is arranged to engage a corresponding plate 21 on the workpiece support 15 in a locking manner. For this purpose, as also apparent from Figure 4 and Figure 5, the tongue part 20 is folded such that is guided into engagement with the plate 21 when mounted. In this mounting position, the first longitudinal extension L presents an angle ϕ to a second longitudinal extension L_{w} of the workpiece support 15.

With reference to Figure 8, showing a perspective view of the cover assembly 6 attached to the workpiece support 15, the workpiece support 15 in this example comprises channels 22 for gathering water that has collected dust when the saw assembly 1 is used for wet cutting. These channels 22 are connected to a drainage system via apertures (not shown) for disposing and/or taking care of the dust-filled water. However, in this dry cutting configuration, when the dust is intended to be conveyed by means of a vacuum dust collection arrangement instead, it is desirable that there are no connections to a drainage system, and therefore separate channel covers 23 (only one shown) are used for covering the channels 22. This means that when the dust is intended to be conveyed by means of the fan device 12 and the cover assembly 6 is attached to the workpiece support 15, the channels 22 are covered with corresponding channel covers 23. In this way, turbulence is reduced, and the dust is more easily guided into the cover assembly 6. According to some aspects, when the cover assembly 6 with its base 16 is attached to the workpiece support 15, the first longitudinal extension L and the second longitudinal extension L_{w} are parallel to each other. In Figure 6, Figure 7 and Figure 8, wheels or rollers 24a, 24b comprised in the workpiece support 15 are shown, these are used for moving the workpiece support 15 along the frame 3, the workpiece support 15 being movably carried by the frame 3 by means of the rollers 24a, 24b that run in corresponding rails 33a, 33b in the frame 3, as indicated in Figure 1, Figure 2 and Figure 3.

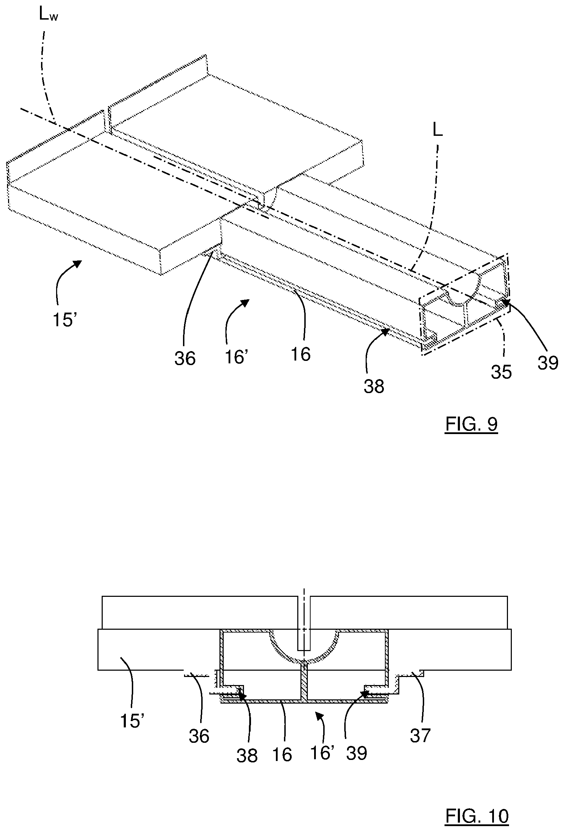

In the following, four further examples for mounting the cover assembly 6 to the workpiece support 15 will be disclosed with reference to Figure 9 - Figure 17. Figure 9 - Figure 17 are all of a schematical character, only schematically showing how the base 16 that is comprised in the supporting structure 10 is attached to the workpiece support 15. For reasons of clarity, the cover and rail sections are not shown although these of course are assumed to be present when the cover assembly is completely mounted and ready for use. Furthermore, no wheels or rollers that can be comprised in the workpiece support are shown. In the following, only the base is referred to, although the base is comprised in the supporting structure, since it is the base that is attached to the workpiece support 15.

With reference to Figure 9 and Figure 10, where Figure 9 shows a perspective side view with a section plane 35 and Figure 10 shows a side view towards the section plane 35, the base 16' is attached to the workpiece support 15' by being inserted into longitudinally extending slide holders 36, 37 that are comprised in the workpiece support 15'. In order to enable this attachment, the base 16' comprises longitudinally extending grooves 38, 39, where the slide holders 36, 37 are arranged to slide in the grooves 38, 39, such that the base 16' is fully attached to the workpiece support 15' when the slide holders 36, 37 are fully inserted into the ridges 38, 39.

According to some aspects, as shown in Figure 9, when the base 16' is attached to the workpiece support 15', the first longitudinal extension L and the second longitudinal extension L_{w} are parallel to each other.

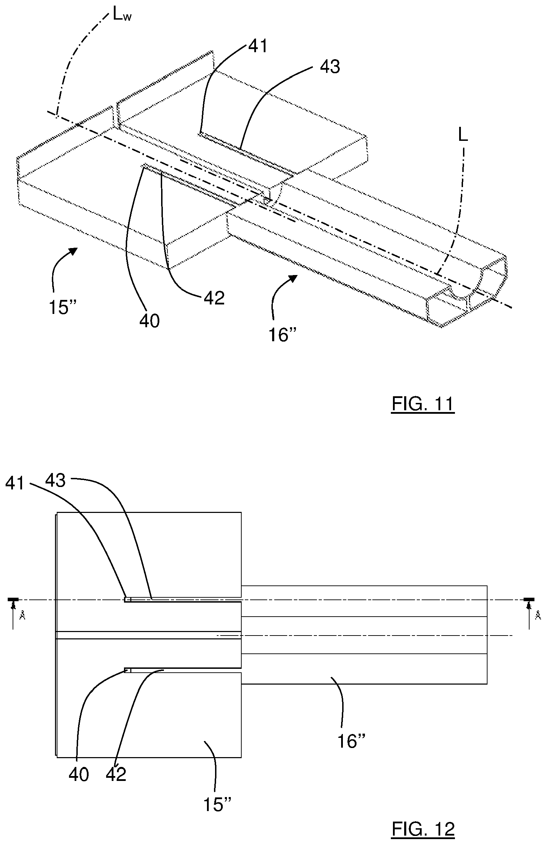

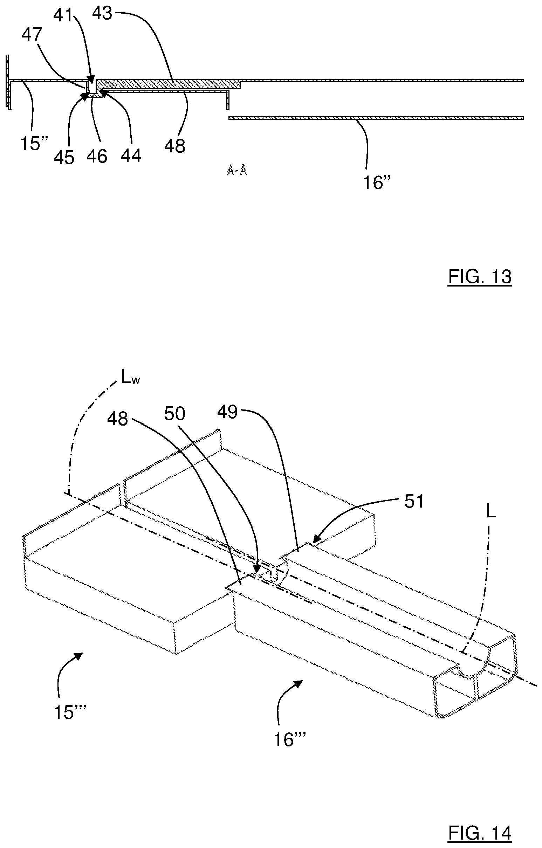

With reference to Figure 11, Figure 12 and Figure 13, where Figure 11 shows a perspective side view, Figure 12 shows a top view and Figure 13 shows a sectional view, the workpiece support 15" comprises longitudinally extending grooves 40, 41 and the base 16" comprises longitudinally extending rods 42, 43. As in particular shown in Figure 13, showing one rod 43 positioned in a corresponding groove 41, the rod comprises a lowered hook part 44 that is inserted in an opening 45 at the end of the groove 41 that is farthest from the rest of the base 16". The hook part 44 comprises a pin 46 that is intended to engage and rest on an end wall part 47 that ends the groove 41. The same arrangement is present for both rods 42, 43.

It is understood from Figure 13, that when the base 16" is attached to the workpiece support 15", it is inclined such that the pins 46 are allowed to enter opening 45, and then straightened such that the pins 46 can come to rest against the corresponding end wall part 47.

This means that during mounting, the first longitudinal extension L and the second longitudinal extension L_{w} are parallel to each other. According to some aspects, as shown in Figure 11, when the base 16" is attached to the workpiece support 15", the first longitudinal extension L and the second longitudinal extension L_{w} are parallel to each other.

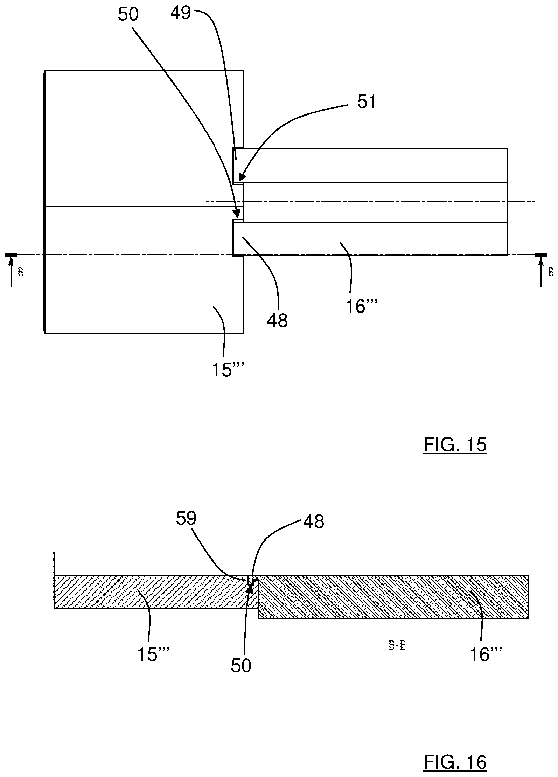

With reference to Figure 14, Figure 15 and Figure 16, where Figure 14 shows a perspective side view, Figure 15 shows a top view and Figure 16 shows a sectional view, the base 16‴ comprises two longitudinally protruding hook members 48, 49 that protrude from the end of the base 16‴ that is intended to face the workpiece support 15"'. The hook members 48, 49 are intended to engage corresponding indents 50, 51 in the workpiece support 15‴.

It is understood from Figure 16, that when the base 16‴ is attached to the workpiece support 15‴, it is inserted from the above, such that the hook members 48, 49 are inserted into the corresponding indents 50, 51. Each hook member 48, 49 comprises a corresponding gripping pin 59 (only one shown in Figure 16) that is inclined such that it is perpendicular to the rest of the corresponding hook member 48, 49 and can perform a griping attachment to the workpiece support 15‴.

According to some aspects, as shown in Figure 14, when the base 16‴ is attached to the workpiece support 15‴, the first longitudinal extension L and the second longitudinal extension L_{w} are parallel to each other.

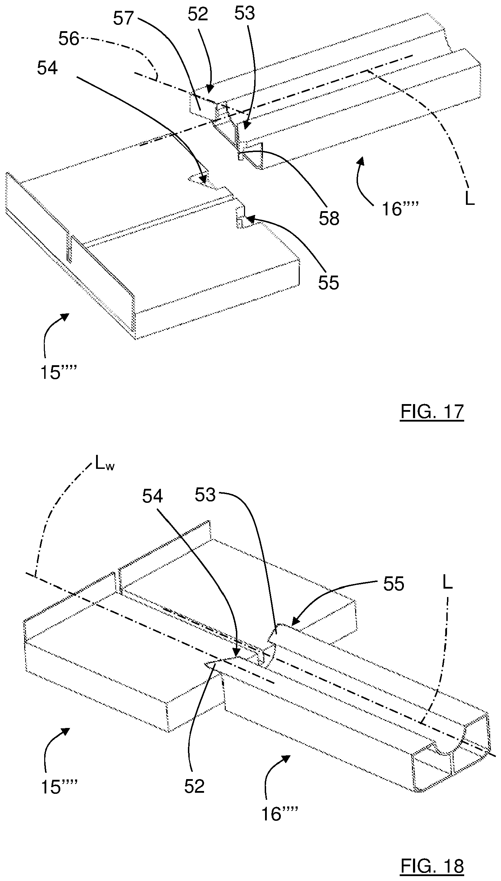

With reference to Figure 17 and Figure 18, where Figure 17 shows a first perspective side view, and Figure 16 shows a second perspective side view, the base 16ʺʺ comprises two longitudinally protruding inclined hook members 52, 53 that protrude from the end of the base 16ʺʺ that is intended to face the workpiece support 15"". The inclined hook members 52, 53 are intended to engage corresponding indents 54, 55 in the workpiece support 15ʺʺ in a similar way as in the previous example. The hook members 52, 53 are inclined with respect to the first longitudinal extension L as indicated with a dash-dotted 56 for one inclined hook member 52 in Figure 17.

When the base 16ʺʺ is attached to the workpiece support 15ʺʺ, it is inserted from the above, such that the inclined hook members 52, 53 are inserted into the corresponding indents 54, 55. Each hook member 52, 53 comprises a corresponding gripping pin 57, 58 that is inclined such that is perpendicular to the rest of the corresponding hook member 52, 53 and can perform a gripping attachment to the workpiece support 15"".

According to some aspects, as shown in Figure 18, when the base 16ʺʺ is attached to the workpiece support 15ʺʺ, the first longitudinal extension L and the second longitudinal extension L_{w} are parallel to each other.

For all the above examples, the base 16 is attached to the workpiece support 15 by means of co-operating fastening means comprised in both the base 16 and the workpiece support 15, where these fastening means are intended to engage each other such that the base 16 and the workpiece support 15 both extend straight such that the first longitudinal extension L runs parallel to the second longitudinal extension L_{w} when the base 16 is attached to the workpiece support 15. This means that the base 16 is fixed to the workpiece support 15 such that no bending or rotating movements are possible, where de-attachment only is possible by performing the attachment procedure in reverse.

The present disclosure is not limited to the examples described above, but may vary freely within the scope of the appended claims. For example, the cover assembly 6 can be attached to the workpiece support 15 in many different ways, the mounting described only being an example of how it can be achieved. It is desired that the mounting is reliable and at the same time easily releasable, for example enabling a quick change between dry cutting and wet cutting.

In this context, expressions such as straight and parallel are not intended to be interpreted as mathematically exact, but within what normally is practically obtainable.

According to some aspects, the cover 9 is attached without rail sections, other arrangements for moving the cover 9 relative the base 16 are conceivable.

According to some aspects, no wheels or rollers are comprised in the workpiece support 15, other means for moving the workpiece support 15 relative the frame 3 are conceivable, for example slide rails.

According to some aspects, the cover comprises the rail sections 27, 28, not the supporting structure 10.

The base 16 comprises first fastening means and the workpiece support 15 comprises second fastening means as described with reference to Figure 6 - Figure 18. The respective co-operating first fastening means and second fastening means comprises at least one of:
- one or more guiding pins 18a. 18b and one or more apertures 19a, 19b arranged to be engaged by said guiding pins 18a. 18b;
- at least one resilient tongue part 20 and at least one plate 21 that is arranged to be engaged engage by said tongue part 20;
- grooves 38, 39 and slide holders 36, 37, where the slide holders 36, 37 are arranged to slide in the grooves 38, 39;
- longitudinally extending rods 42, 43.and longitudinally extending grooves 40, 41, where each rod 42, 43.comprises a lowered hook part 44 that is arranged to be inserted in an opening 45 at the end of the groove 41;
- longitudinally protruding hook members 48, 49; 52, 53 and indents 50, 51; 54, 55, where the hook members 48, 49; 52, 53 are intended to be inserted into the indents 50, 51; 54, 55.

Which fastening means that is comprised in the base 16 and which fastening means that is comprised in the workpiece support 15 can of course be varied, the examples provided can for examples have reverse positioned of the fastening means.

According to an example, the saw blade 4 is enabled to run in a slot 7 in the cover assembly 6, where the slot 7 is extending in the first longitudinal extension L.

According to an example, the saw assembly 1 comprises releasably attachable channel covers 23 that are adapted to cover water drainage channels comprised in the workpiece support 15.

## Claims

1. A tile or masonry saw assembly (1) comprising:
- a saw device (2) including a motor (5) arranged to run a saw blade (4) to cut a workpiece in a cutting direction (C);
- a frame (3) that is arranged to support the saw device (2) such that it is enabled to move relative to the frame (3) to execute cutting operations by means of the saw blade (4);
- a workpiece support (15) operably coupled to the frame (3) (2) to support the workpiece relative to the saw device (2), and to allow the workpiece support (15) to be moved along the frame (3); and
- a cover assembly (6) that has a first longitudinal extension (L) and in turn comprises a cover (9) and a supporting structure (10), and has a front end (25) that is arranged to face the saw blade (4) and a rear end that (26) is arranged to face away from the saw blade (4), where the cover assembly (6) comprises a dust hose attachment (11) that is positioned at the rear end (26) and is arranged to be connected to a vacuum dust collection arrangement; **characterized in that** said cover assembly (6) is releasably attachable to the workpiece support (15), where the supporting structure (10) comprises a base (16) that is arranged to be attached to the workpiece support (15); and **in that** the workpiece support (15) has a second longitudinal extension (L_{w}), where furthermore the base (16) is arranged to be attached to the workpiece support (15) by means of co-operating fastening means comprised in both the base (16) and the workpiece support (15), where these fastening means are intended to engage each other such that the base (16) and the workpiece support (15) both extend straight such that the first longitudinal extension (L) runs parallel to the second longitudinal extension (L_{w}) when the base (16) is attached to the workpiece support (15), where the cover (9) is movable relative to
the base (16) in the first longitudinal extension (L),

2. The saw assembly (1) according to claim 1, **characterized in that** the longitudinal extension (L) is arranged to run along the cutting direction (C) when the cover assembly (6) is attached to the workpiece support (15).

3. The saw assembly (1) according to claim 1 or 2, **characterized in that** the base (16) comprises first fastening means and that the workpiece support (15) comprises second fastening means, where the respective co-operating first fastening means and second fastening means comprises at least one of:
- one or more guiding pins (18a, 18b) and one or more apertures (19a, 19b) arranged to be engaged by said guiding pins (18a, 18b);
- at least one resilient tongue part (20) and at least one plate (21) that is arranged to be engaged by said tongue part (20);
- grooves (38, 39) and slide holders (36, 37), where the slide holders (36, 37) are arranged to slide in the grooves (38, 39);
- longitudinally extending rods (42, 43) and longitudinally extending grooves (40, 41), where each rod (42, 43) comprises a lowered hook part (44) that is arranged to be inserted in an opening (45) at the end of the groove (41);
- longitudinally protruding hook members (48, 49; 52, 53) and indents (50, 51; 54, 55), where the hook members (48, 49; 52, 53) are intended to be inserted into the indents (50, 51; 54, 55).

4. The saw assembly (1) according to any one of the previous claims, **characterized in that** the saw blade (4) is enabled to run in a slot (7) in the cover assembly (6), where the slot (7) is extending in the first longitudinal extension (L).

5. The saw assembly (1) according to any one of the previous claims, **characterized in that** the saw assembly (1) comprises releasably attachable channel covers (23) that are adapted to cover water drainage channels (22) comprised in the workpiece support (15).

6. The saw assembly (1) according to any one of the previous claims, **characterized in that** the cover assembly (6) comprises telescopically extendable rail sections (27, 28) that are attached to the cover (9) and to a rail section holder (17) that is attached to the base (16), these rail sections (27, 28) enabling the cover (9) to move relative to the base (16).

7. A tile or masonry saw assembly (1) comprising:
- a saw device (2) including a motor (5) arranged to run a saw blade (4) to cut a workpiece in a cutting direction (C);
- a frame (3) that is arranged to support the saw device (2) such that it is enabled to move relative to the frame (3) to execute cutting operations by means of the saw blade (4);
- a workpiece support (15) operably coupled to the frame (2) to support the workpiece relative to the saw device (2), and to allow the workpiece support (15) to be moved along the frame (3); and
- a cover assembly (6) that has a first longitudinal extension (L) and in turn comprises a cover (9) and a supporting structure (10), and has a front end (25) that is arranged to face the saw blade (4) and a rear end (26) that is arranged to face away from the saw blade (4), where the cover assembly (6) comprises a dust hose attachment (11) that is positioned at the rear end (26) and is arranged to be connected to a vacuum dust collection arrangement;
**characterized in that** the supporting structure (10) comprises a base (16) that is arranged to be fastened to the workpiece support (15), where the cover (9) is movable relative to
the base (16) in the first longitudinal extension (L) along the cutting direction (C).

8. The saw assembly (1) according to claim 7, **characterized in that** the cover assembly (6) comprises telescopically extendable rail sections (27, 28) that are attached to the cover (9) and to a rail section holder (17) that is attached to the base (16), these rail sections (27, 28) enabling the cover (9) to move relative to the base (16).

9. The saw assembly (1) according to any one of the claims 7 or 8, **characterized in that** the cover assembly (6) has a first longitudinal extension (L) along the cutting direction (C), where the saw blade (4) is enabled to run in a slot (7) in the cover assembly (6), where the slot (7) is extending in the first longitudinal extension (L).

10. The saw assembly (1) according to any one of the claims 7-9, **characterized in that** the cover assembly (6) is releasably attachable to the workpiece support (15).

11. The saw assembly (1) according to claim 10, **characterized in that** the workpiece support (15) has a second longitudinal extension (L_{w}), where furthermore the base (16) is arranged to be attached to the workpiece support (15) by means of co-operating fastening means comprised in both the base (16) and the workpiece support (15), where these fastening means are intended to engage each other such that the base (16) and the workpiece support (15) both extend straight such that the first longitudinal extension (L) runs parallel to the second longitudinal extension (L_{w}) when the base (16) is attached to the workpiece support (15).

12. The saw assembly (1) according to any one of the claims 7-11, **characterized in that** the saw assembly (1) comprises releasably attachable channel covers (23) that are adapted to cover water drainage channels (22) comprised in the workpiece support (15).

## Patentansprüche

1. Fliesen- oder Mauerwerksägebaugruppe (1), Folgendes umfassend:
- eine Sägevorrichtung (2), umfassend einen Motor (5), der dazu angeordnet ist, ein Sägeblatt (4) anzutreiben, um ein Werkstück in eine Schneidrichtung (C) zu schneiden;
- einen Rahmen (3), der dazu angeordnet ist, die Sägevorrichtung (2) zu tragen, sodass sie sich in Bezug zum Rahmen (3) bewegen kann, um Schneidvorgänge mittels des Sägeblatts (4) auszuführen;
- eine Werkstückauflage (15), die mit dem Rahmen (3) wirkverbunden ist, um das Werkstück in Bezug zur Sägevorrichtung (2) zu tragen und zuzulassen, dass die Werkstückauflage (15) entlang des Rahmens (3) bewegt wird; und
- eine Abdeckungsbaugruppe (6), die eine erste Längsausdehnung (L) aufweist und wiederum eine Abdeckung (9) und eine Trägerstruktur (10) umfasst und ein vorderes Ende (25), das dazu angeordnet ist, dem Sägeblatt (4) zugewandt zu sein, und ein hinteres Ende (26), das dazu angeordnet ist, vom Sägeblatt (4) abgewandt zu sein, aufweist, wobei die Abdeckungsbaugruppe (6) einen Staubschlauchanschluss (11) umfasst, der am hinteren Ende (26) positioniert und dazu angeordnet ist, mit einer Vakuumstaubsammelanordnung verbunden zu sein; **dadurch gekennzeichnet, dass** die Abdeckungsbaugruppe (6) lösbar an der Werkstückauflage (15) anbringbar ist, wobei die Trägerstruktur (10) eine Basis (16) umfasst, die dazu angeordnet ist, an der Werkstückauflage (15) angebracht zu sein, und dadurch,
dass die Werkstückauflage (15) eine zweite Längsausdehnung (Lw) aufweist, wobei weiterhin die Basis (16) dazu angeordnet ist, mittels zusammenwirkender sowohl in der Basis (16) als auch in der Werkstückauflage (15) umfasster Befestigungseinrichtungen an der Werkstückauflage (15) angebracht zu sein, wobei die Befestigungseinrichtungen dazu bestimmt sind, ineinander einzugreifen, sodass sich sowohl die Basis (16) als auch die Werkstückauflage (15) gerade erstrecken, sodass die erste Längsausdehnung (L) parallel zur zweiten Längsausdehnung (Lw) verläuft, wenn die Basis (16) an der Werkstückauflage (15) angebracht ist, wobei die Abdeckung (9) in Bezug zur Basis (16) in die erste Längsausdehnung (L) beweglich ist.

2. Sägebaugruppe (1) nach Anspruch 1, **dadurch gekennzeichnet, dass** die Längsausdehnung (L) dazu angeordnet ist, entlang der Schneidrichtung (C) zu verlaufen, wenn die Abdeckungsbaugruppe (6) an der Werkstückauflage (15) angebracht ist.

3. Sägebaugruppe (1) nach Anspruch 1 oder 2, **dadurch gekennzeichnet, dass** die Basis (16) eine erste Befestigungseinrichtung umfasst und dass die Werkstückauflage (15) eine zweite Befestigungseinrichtung umfasst, wobei das jeweilige Zusammenwirken der ersten Befestigungseinrichtung und der zweiten Befestigungseinrichtung mindestens eines der folgenden umfasst:
- einen oder mehrere Führungsstifte (18a, 18b) und eine oder mehrere Öffnungen (19a, 19b), die dazu angeordnet sind, von den Führungsstiften (18a, 18b) eingegriffen zu werden;
- mindestens einen elastischen Zungenteil (20) und mindestens eine Platte (21), die dazu angeordnet ist, vom Zungenteil (20) eingegriffen zu werden;
- Nuten (38, 39) und Schiebehalterungen (36, 37), wobei die Schiebehalterungen (36, 37) dazu angeordnet sind, sich in den Nuten (38, 39) zu verschieben;
- sich längs erstreckende Stäbe (42, 43) und sich längs erstreckende Nuten (40, 41), wobei jeder Stab (42, 43) einen abgesenkten Hakenteil (44) umfasst, der dazu angeordnet ist, in eine Öffnung (45) am Ende der Nut (41) eingesetzt zu werden;
- längs vorstehende Hakenelemente (48, 49; 52, 53) und Kerben (50, 51; 54, 55), wobei die Hakenelemente (48, 49; 52, 53) dazu bestimmt sind, in die Kerben (50, 51; 54, 55) eingesetzt zu werden.

4. Sägebaugruppe (1) nach einem der vorstehenden Ansprüche, **dadurch gekennzeichnet, dass** das Sägeblatt (4) dazu funktionsfähig ist, in einem Schlitz (7) in der Abdeckungsbaugruppe (6) zu laufen, wobei sich der Schlitz (7) in die erste Längsausdehnung (L) erstreckt.

5. Sägebaugruppe (1) nach einem der vorstehenden Ansprüche, **dadurch gekennzeichnet, dass** die Sägebaugruppe (1) lösbar anbringbare Kanalabdeckungen (23) umfasst, die dazu eingerichtet sind, Wasserablaufkanäle (22) abzudecken, die in der Werkstückauflage (15) enthalten sind.

6. Sägebaugruppe (1) nach einem der vorstehenden Ansprüche, **dadurch gekennzeichnet, dass** die Abdeckungsbaugruppe (6) teleskopisch ausfahrbare Schienenabschnitte (27, 28) umfasst, die an der Abdeckung (9) und an einer an der Basis (16) angebrachten Schienenabschnittshalterung (17) angebracht sind, wobei die Schienenabschnitte (27, 28) zulassen, dass sich die Abdeckung (9) in Bezug zur Basis (16) bewegt.

7. Fliesen- oder Mauerwerksägebaugruppe (1), Folgendes umfassend:
- eine Sägevorrichtung (2), umfassend einen Motor (5), der dazu angeordnet ist, ein Sägeblatt (4) anzutreiben, um ein Werkstück in eine Schneidrichtung (C) zu schneiden;
- einen Rahmen (3), der dazu angeordnet ist, die Sägevorrichtung (2) zu tragen, sodass sie sich in Bezug zum Rahmen (3) bewegen kann, um Schneidvorgänge mittels des Sägeblatts (4) auszuführen;
- eine Werkstückauflage (15), die mit dem Rahmen (2) wirkverbunden ist, um das Werkstück in Bezug zur Sägevorrichtung (2) zu tragen und zuzulassen, dass die Werkstückauflage (15) entlang des Rahmens (3) bewegt wird; und
- eine Abdeckungsbaugruppe (6), die eine erste Längsausdehnung (L) aufweist und wiederum eine Abdeckung (9) und eine Trägerstruktur (10) umfasst und ein vorderes Ende (25), das dazu angeordnet ist, dem Sägeblatt (4) zugewandt zu sein, und ein hinteres Ende (26), das dazu angeordnet ist, vom Sägeblatt (4) abgewandt zu sein, aufweist, wobei die Abdeckungsbaugruppe (6) einen Staubschlauchanschluss (11) umfasst, der am hinteren Ende (26) positioniert und dazu angeordnet ist, mit einer Vakuumstaubsammelanordnung verbunden zu sein;
**dadurch gekennzeichnet, dass** die Trägerstruktur (10) eine Basis (16) umfasst, die dazu angeordnet ist, an der Werkstückauflage (15) befestigt zu werden, wobei die Abdeckung (9) in Bezug zur Basis (16) in die erste Längsausdehnung (L) entlang der Schneidrichtung (C) beweglich ist.

8. Sägebaugruppe (1) nach Anspruch 7, **dadurch gekennzeichnet, dass** die Abdeckungsbaugruppe (6) teleskopisch ausfahrbare Schienenabschnitte (27, 28) umfasst, die an der Abdeckung (9) und an einer an der Basis (16) angebrachten Schienenabschnittshalterung (17) angebracht sind, wobei die Schienenabschnitte (27, 28) zulassen, dass sich die Abdeckung (9) in Bezug zur Basis (16) bewegt.

9. Sägebaugruppe (1) nach einem der Ansprüche 7 oder 8, **dadurch gekennzeichnet, dass** die Abdeckungsbaugruppe (6) eine erste Längsausdehnung (L) entlang der Schneidrichtung (C) aufweist, wobei das Sägeblatt (4) dazu funktionsfähig ist, in einem Schlitz (7) in der Abdeckungsbaugruppe (6) zu laufen, wobei sich der Schlitz (7) in die erste Längsausdehnung (L) erstreckt.

10. Sägebaugruppe (1) nach einem der Ansprüche 7-9, **dadurch gekennzeichnet, dass** die Abdeckungsbaugruppe (6) lösbar an der Werkstückauflage (15) anbringbar ist.

11. Sägebaugruppe (1) nach Anspruch 10, **dadurch gekennzeichnet, dass** die Werkstückauflage (15) eine zweite Längsausdehnung (Lw) aufweist, wobei weiterhin die Basis (16) dazu angeordnet ist, mittels zusammenwirkender sowohl in der Basis (16) als auch in der Werkstückauflage (15) umfasster Befestigungseinrichtungen an der Werkstückauflage (15) angebracht zu sein, wobei die Befestigungseinrichtungen dazu bestimmt sind, ineinander einzugreifen, sodass sich sowohl die Basis (16) als auch die Werkstückauflage (15) gerade erstrecken, sodass die erste Längsausdehnung (L) parallel zur zweiten Längsausdehnung (Lw) verläuft, wenn die Basis (16) an der Werkstückauflage (15) angebracht ist.

12. Sägebaugruppe (1) nach einem der Ansprüche 7-11, **dadurch gekennzeichnet, dass** die Sägebaugruppe (1) lösbar anbringbare Kanalabdeckungen (23) umfasst, die dazu eingerichtet sind, Wasserablaufkanäle (22) abzudecken, die in der Werkstückauflage (15) enthalten sind.

## Revendications

1. Scie à carreau ou à maçonnerie (1) comprenant :
un dispositif de scie (2) comprenant un moteur (5) conçu pour faire fonctionner une lame de scie (4) afin de couper une pièce dans une direction de coupe (C) ;
un cadre (3) qui est conçu pour supporter le dispositif de scie (2) de sorte qu'il puisse se déplacer par rapport au cadre (3) pour effectuer des opérations de coupe au moyen de la lame de scie (4) ;
un support de pièce (15) accouplé fonctionnellement au cadre (3) pour supporter la pièce par rapport au dispositif de scie (2) et pour permettre au support de pièce (15) d'être déplacé le long du cadre (3) ; et
un ensemble couvercle (6) qui a une première extension longitudinale (L) et comprend à son tour un couvercle (9) et une structure de support (10), et a une extrémité avant (25) qui est disposée pour faire face à la lame de scie (4) et une extrémité arrière (26) qui est disposée pour faire face à l'opposé de la lame de scie (4), l'ensemble couvercle (6) comprenant une fixation de tuyau à poussière (11) qui est positionnée à l'extrémité arrière (26) et est conçue pour être reliée à un dispositif de collecte de la poussière par aspiration ;
**caractérisée en ce que** ledit ensemble couvercle (6) peut être fixé amovible au support de pièce (15), la structure de support (10) comprenant une base (16) qui est conçue pour être fixée au support de pièce (15) ;
et **en ce que** le support de pièce (15) a une seconde extension longitudinale (L_{w}), en outre la base (16) étant conçue pour être fixée au support de pièce (15) à l'aide de moyens de fixation coopératifs compris à la fois dans la base (16) et le support de pièce (15), ces moyens de fixation étant destinés à venir mutuellement en prise de sorte que la base (16) et le support de pièce (15) s'étendent tous deux en ligne droite de sorte que la première extension longitudinale (L) soit parallèle à la seconde extension longitudinale (L_{w}) lorsque la base (16) est fixée au support de pièce (15), le couvercle (9) étant mobile par rapport à la base (16) dans la première extension longitudinale (L).

2. Scie (1) selon la revendication 1, **caractérisée en ce que** l'extension longitudinale (L) est conçue pour passer le long de la direction de coupe (C) lorsque l'ensemble couvercle (6) est fixé au support de pièce (15) .

3. Scie (1) selon la revendication 1 ou 2, **caractérisée en ce que** la base (16) comprend un premier moyen de fixation et **en ce que** le support de pièce (15) comprend un second moyen de fixation, le premier moyen de fixation et le second moyen de fixation coopérants respectifs comprenant au moins l'un parmi :
une ou plusieurs broches de guidage (18a, 18b) et une ou plusieurs ouvertures (19a, 19b) conçues pour être mises en prise par lesdites broches de guidage (18a, 18b) ;
au moins une partie languette élastique (20) et au moins une plaque (21) qui est conçue pour être mise en prise par ladite partie languette (20) :
des rainures (38, 39) et des supports de glissière (36, 37), les supports de glissière (36, 37) étant conçus pour coulisser dans les rainures (38, 39) ;
des tiges s'étendant longitudinalement (42, 43) et des rainures s'étendant longitudinalement (40, 41), chaque tige (42, 43) comprenant une partie crochet abaissée (44) qui est conçue pour être insérée dans une ouverture (45) à l'extrémité de la rainure (41) ;
des éléments crochets (48, 49 ; 52, 53) faisant saillie longitudinalement et des encoches (50, 51 ; 54, 55), les éléments crochets (48, 49 ; 52, 53) étant destinés à être insérés dans les encoches (50, 51 ; 54, 55) .

4. Scie (1) selon l'une quelconque des revendications précédentes, **caractérisée en ce que** la lame de scie (4) peut passer dans une fente (7) dans l'ensemble couvercle (6), la fente (7) s'étendant dans la première extension longitudinale (L).

5. Scie (1) selon l'une quelconque des revendications précédentes, **caractérisée en ce que** la scie (1) comprend des couvercles de canaux (23) pouvant être fixés amovibles qui sont conçus pour couvrir les canaux d'évacuation d'eau (22) compris dans le support de pièce (15) .

6. Scie (1) selon l'une quelconque des revendications précédentes, **caractérisée en ce que** l'ensemble couvercle (6) comprend des sections de rail télescopiques (27, 28) qui sont fixées au couvercle (9) et à un support de section de rail (17) qui est fixé à la base (16), ces sections de rail (27, 28) permettant au couvercle (9) de se déplacer par rapport à la base (16).

7. Scie à carreau ou à maçonnerie (1) comprenant :
un dispositif de scie (2) comprenant un moteur (5) conçu pour faire fonctionner une lame de scie (4) afin de couper une pièce dans une direction de coupe (C) ;
un cadre (3) qui est conçu pour supporter le dispositif de scie (2) de sorte qu'il puisse se déplacer par rapport au cadre (3) pour effectuer des opérations de coupe au moyen de la lame de scie (4) ;
un support de pièce (15) accouplé fonctionnellement au cadre (2) pour supporter la pièce par rapport au dispositif de scie (2) et pour permettre au support de pièce (15) d'être déplacé le long du cadre (3) ; et
un ensemble couvercle (6) qui a une première extension longitudinale (L) et comprend à son tour un couvercle (9) et une structure de support (10), et a une extrémité avant (25) qui est disposée pour faire face à la lame de scie (4) et une extrémité arrière (26) qui est disposée pour faire face à l'opposé de la lame de scie (4), l'ensemble couvercle (6) comprenant une fixation de tuyau à poussière (11) qui est positionnée à l'extrémité arrière (26) et est conçue pour être reliée à un dispositif de collecte de la poussière par aspiration ;
**caractérisée en ce que** la structure de support (10) comprend une base (16) qui est conçue pour être fixée au support de pièce (15), le couvercle (9) étant mobile par rapport à la base (16) dans la première extension longitudinale (L) le long de la direction de coupe (C).

8. Scie (1) selon la revendication 7, **caractérisée en ce que** l'ensemble couvercle (6) comprend des sections de rail télescopiques (27, 28) qui sont fixées au couvercle (9) et à un support de section de rail (17) qui est fixé à la base (16), ces sections de rail (27, 28) permettant au couvercle (9) de se déplacer par rapport à la base (16) .

9. Scie (1) selon l'une quelconque des revendications 7 ou 8, **caractérisée en ce que** l'ensemble couvercle (6) a une première extension longitudinale (L) le long de la direction de coupe (C), la lame de scie (4) pouvant passer dans une fente (7) dans l'ensemble couvercle (6), la fente (7) s'étendant dans la première extension longitudinale (L).

10. Scie (1) selon l'une quelconque des revendications 7 à 9, **caractérisée en ce que** l'ensemble couvercle (6) peut être fixé amovible au support de pièce (15).

11. Scie (1) selon la revendication 10, **caractérisée en ce que** le support de pièce (15) a une seconde extension longitudinale (L_{w}), en outre la base (16) étant conçue pour être fixée au support de pièce (15) à l'aide de moyens de fixation coopératifs compris à la fois dans la base (16) et le support de pièce (15), ces moyens de fixation étant destinés à venir en prise mutuellement de sorte que la base (16) et le support de pièce (15) s'étendent tous deux en ligne droite de sorte que la première extension longitudinale (L) soit parallèle à la seconde extension longitudinale (L_{w}) lorsque la base (16) est fixée au support de pièce (15).

12. Scie (1) selon l'une quelconque des revendications 7 à 11, **caractérisée en ce que** la scie (1) comprend des couvercles de canaux (23) pouvant être fixés amovibles qui sont conçus pour couvrir les canaux d'évacuation d'eau (22) compris dans le support de pièce (15).
